# EUROPÄISCHE PATENTSCHRIFT

(11) **EP 3 696 629 B1**
(45) Veröffentlichungstag und Bekanntmachung des Hinweises auf die Patenterteilung: **23.07.2025**
(21) Anmeldenummer: 19156634.8
(22) Anmeldetag: 12.02.2019
(51) Int. Cl.: G05B 19/05, G05B 23/02, G05B 17/02, G06F 11/3668

(54) **VERFAHREN ZUR ÜBERPRÜFUNG EINER INDUSTRIELLEN ANLAGE, COMPUTERPROGRAMM, COMPUTERLESBARES MEDIUM UND SYSTEM**
METHOD FOR MONITORING AN INDUSTRIAL INSTALLATION, COMPUTER PROGRAM, COMPUTER-READABLE MEDIUM AND SYSTEM
PROCÉDÉ DE VÉRIFICATION D'UNE INSTALLATION INDUSTRIELLE, PROGRAMME INFORMATIQUE, SUPPORT LISIBLE PAR ORDINATEUR ET SYSTÈME

(43) Veröffentlichungstag der Anmeldung: 19.08.2020
(73) Patentinhaber: Siemens Aktiengesellschaft, 80333 München (DE)
(72) Erfinder: Heindl, Elisabeth, 90556 Cadolzburg (DE); Neidig, Jörg, 90409 Nürnberg (DE); Trenner, Thomas, 90766 Fürth (DE)
(74) Vertreter: Siemens Patent Attorneys

(56) Entgegenhaltungen:
- WO-A1-2018/162048
- US-A1- 2007 162 894
- US-A1- 2009 089 027
- US-A1- 2011 288 846
- US-B2- 9 134 726

## Beschreibung

Die Erfindung betrifft ein Verfahren gemäß Anspruch 1 zur Überprüfung einer industriellen Anlage, insbesondere Automatisierungsanlage.

Darüber hinaus betrifft die Erfindung ein Computerprogramm gemäß Anspruch 14, ein computerlesbares Medium gemäß Anspruch 15 und ein System gemäß Anspruch 16.

Eine Automatisierungsanlage besteht aus vielen unterschiedlichen Einzelkomponenten deren Zusammenspiel erst die Lösung der Automatisierungsaufgabe ermöglicht. Bei den Einzelkomponenten kann es sich sowohl um Hardwarekomponenten als auch um Softwarekomponenten als auch um kombinierte Hard- und Softwarekomponenten handeln.

Insbesondere bei der Inbetriebnahme einer Anlage stellt eine Überprüfung auf Fehler einen wesentlichen Aspekt dar, um die erforderlichen Sicherheitsanforderungen zu gewährleisten. Gerade durch das Zusammenspiel der Vielzahl von Einzelkomponenten können jedoch Abhängigkeiten entstehen, und somit auch zusätzliche Ursachen für ein Fehlverhalten, die beim Test der Einzelkomponenten gar nicht berücksichtigt werden könnten. Eine umfassende Überprüfung der möglichen Abhängigkeiten bei einer hohen Anzahl von Einzelkomponenten ist nach Kenntnisstand der Anmelderin derzeit nicht oder nur unter größtem Aufwand möglich.

Problematisch ist auch, dass derzeit in der Regel nur diejenigen Testszenarien ausgeführt werden, die während des Engineerings Berücksichtigung finden. Das heißt insbesondere, dass Fehlermöglichkeiten des Gesamtsystems, die außerhalb der Vorstellungskraft der einzelnen Ingenieure liegen, oftmals unerkannt bleiben. Auch gilt, dass viele vorgedachte und ausprogrammierte Reaktionen auf Fehlersituationen während Inbetriebnahme und Test aus Zeit- oder Aufwandsgründen gar nicht erst ausprobiert werden. Im Ergebnis erfährt man oft erst in einem echten Fehlerfall im Betrieb, wie sich das System tatsächlich verhält und ob die angesetzten Maßstäbe ausreichend waren.

Bekannt sind Simulationstools, mit der industrielle Anlagen und deren Verhalten simuliert werden können. Im Rahmen solcher Tools ist es möglich, einzelne Komponenten abzuschalten oder zu manipulieren und die Auswirkungen zu beobachten, was nach Kenntnisstand der Anmelderin derzeit nur bewusst und händisch geschieht. Rein beispielhaft für ein Simulationstool bzw. eine Simulationsplattform für industrielle, technische Anlagen sei SIMIT aus dem Hause der Anmelderin genannt (siehe beispielsweise https://new.siemens.com/global/de/produkte/automatisierung/in dustrie-software/simit.html).

Ebenfalls bekannt ist das Tool "Chaos Monkey", von Netflix mit den regelmäßig zufälligen Instanzen eines Software-Services deaktiviert werden, um eine redundante Server-Architektur zu testen und zu verifizieren, dass ein Serverausfall keine merkliche Beeinflussung für Kunden nach sich zieht (siehe beispielsweise https://github.com/Netflix/SimianArmy/wiki/Chaos-Monkey).

Die Druckschrift US 2011/0288846 A1 - Kihas "Technique and tool for efficient testing of controllers in development (H-ACT Project)" zeigt den automatisierten Test einer Steuerungseinrichtung, wobei zufallsgesteuert Eingangsvariablen für den Test erzeugt oder variiert werden.

Die Druckschrift US 9,134,726 B2 - Colombo et al. "METHOD FOR CONFIGURATION SOA-BASED AUTOMATION DEVICES AND FOR DEVELOPING AN ORCHESTRATION MACHINE, PRODUCTION METHOD AND PRODUCTION SYSTEM IN SERVICE-ORIENTED ARCHITECTURE HAVING EMBEDDED SERVICE ORCHESTRATION ENGINE" zeigt ein Konfigurierungstool für eine Automatisierungsanlage bestehend aus einer Anzahl mechatronischer Komponenten.

Die Publikation US 2007/0162894 A1 - Noller et a. "METHOD OF AND SYSTEM FOR DYNAMIC AUTOMATED TEST CASE GENERATION AND EXECUTION" offenbart ein automatisiertes Testsystem, bei dem eine modulare Software in mehreren Testdurchläufen getestet wird, wobei jeweils zufallsbasiert die Reihenfolge bei der Ausführung der Software-module geändert wird.

Ausgehend von dem Stand der Technik besteht eine Aufgabe der vorliegenden Erfindung darin, ein Verfahren zur Überprüfung einer industriellen Anlage, insbesondere Automatisierungsanlage anzugeben, welches eine besonders hohe Zuverlässigkeit und gleichzeitig besonders umfangreiche Überprüfung auch komplexer Anlagen ermöglicht.

Diese Aufgabe wird bei einem Verfahren der eingangs genannten Art dadurch gelöst, dass reale Komponenten einer bereitgestellten realen Anlage und/oder von solchen stammende Daten und/oder simulierte Komponenten einer bereitgestellten simulierten Anlage und/oder von solchen stammende Daten unter Verwendung eines wenigstens einen Zufallsalgorithmus umfassenden Computerprogramms insbesondere im laufenden Betrieb derart manipuliert werden, dass auf Zufall basierend Fehlersituationen in der realen und/oder der simulierten Anlage verursacht werden. Dabei sind zwei oder mehr Komponenten der Anlage und ein Edge-Device über ein Kommunikationsnetzwerk insbesondere in Form eines Busses miteinander verbunden, und Daten, die von wenigstens einer Komponente an wenigstens eine weitere Komponente über das Kommunikationsnetzwerk zu senden sind, vor deren Übergabe an das Kommunikationsnetzwerk von dem auf dem Edge-Device ablaufenden Computerprogramm manipuliert werden.

Die Anmelderin hat festgestellt, dass unter Nutzung eines auf Zufall basierenden, Tool-unterstützten Chaosverfahrens mit vergleichsweise geringem Aufwand eine besonders umfangreiche, zuverlässige Überprüfung auch komplexer industrieller Anlagen möglich wird, dies sowohl während einer Simulationsphase als auch während der Inbetriebnahme insbesondere einer realen, physischen Anlage.

Da erfindungsgemäß auf Zufall basierend Komponenten einer Anlage und/oder von solchen stammenden Daten manipuliert werden, sind resultierende Fehlerszenarien nicht, wie gemäß dem Stand der Technik auf von einem Betreiber bzw. Ingenieuren gezielt ausgewählte bzw. bedachte Szenarien beschränkt, sondern es können quasi beliebige Szenarien verursacht und somit abgedeckt werden. So wird es erstmals möglich, auch Fehler oder Ausfallgründe in einer industriellen Anlage zu finden, die beim Engineering nicht bedacht wurden bzw. bedacht werden konnten, und/oder sich aus der Komplexität der Anlage ergeben. Dies stellt einen erheblichen Vorteil gegenüber dem Stand der Technik dar.

Aufgabe des Computerprogramms, welches im Folgenden auch als Chaos-Softwaretools bezeichnet wird, und dass insbesondere ein Runtime-Tool bildet bzw. darstellt, ist bevorzugt, die (reale und/oder simulierte) Anlage bzw. Teile/Komponenten/Daten dieser beliebig bzw. randomisiert zu boykottieren. Bevorzugt sind von diesem ausgewählte, insbesondere zuvor festgelegte Fehlerszenarien nach dem jeweiligen Zufallsprinzip umzusetzen. Das Chaos-Softwaretool ist hierzu entsprechend ausgebildet. Es handelt sich insbesondere um ein Computerprogramm oder auch eine Computerprogrammsammlung mit entsprechenden Programmcode-Mitteln.

Das erfindungsgemäße Verfahren kann sowohl zur Überprüfung einer physisch bestehenden Anlage durchgeführt werden als auch für eine Anlagensimulation, etwa einen digitalen Zwilling. Selbstverständlich ist auch eine Kombination möglich, dass etwa sowohl eine real existierende Anlage (bzw. zumindest Teile dieser) als auch eine ggf. betriebsbegleitend erfolgende Simulation (bzw. Teile dieser) auf die erfindungsgemäße Weise auf Zufall basierend "boykottiert" werden. Für den Fall, dass sowohl eine reale als auch eine simulierte Anlage bereitgestellt werden, können Komponenten beider Anlagen und/oder zugehörige Daten auf die erfindungsgemäße Weise manipuliert werden.

Das erfindungsgemäße Verfahren bietet auch einen erheblichen Vorteil bei der Abnahme einer Anlage. Mit diesem kann nämlich die Stabilität und Sicherheit einer Anlage nachgewiesen werden, indem auf Zufall basierend Fehlerszenarien verursacht werden und beobachtet wird, dass diese nicht in einen unsicheren Zustand führen.

Darunter, dass eine Komponente manipuliert wird, ist insbesondere auch zu verstehen, dass diese von einem eingeschalteten in einen ausgeschalteten Zustand überführt wird. Auch ein Deaktivieren einer Komponente stellt somit ein Manipulieren dieser dar.

Eine bevorzugte Ausführungsform des erfindungsgemäßen Verfahrens zeichnet sich dadurch aus, dass die Auswirkungen der Manipulation auf die reale und/oder der simulierte Anlage, insbesondere deren Betrieb, erfasst bzw. beobachtet werden, und die reale und/oder die simulierte Anlage und/oder deren Steuerung nach Bedarf angepasst wird, insbesondere erkannte Fehler behoben werden.

Eine Anlage kann während und/oder nach dem erfindungsgemäßen "Boykott" beobachtet werden und Fehler bzw. "Kinderkrankheiten", die dabei auftauchen, können - sofern erforderlich - ausgeräumt werden. Es wird möglich, dass erfindungsgemäß aus dem Zufallsprinzip resultierende Fehler insbesondere noch vor Produktionsbeginn ausgemerzt werden, was sich deutlich positiv auf die Fehlertoleranz, Stabilität und Wartbarkeit einer Anlage während des Betriebes auswirkt.

Die Reaktion der zu überprüfenden Anlage auf die nach dem Zufallsprinzip erzeugten Fehler bzw. Fehlerszenarien kann beispielsweise elektronisch, insbesondere durch das Chaos-Softwaretool aufgezeichnet werden. Selbstverständlich ist es alternativ oder zusätzlich auch möglich, dass die Anlagenreaktion von einer Person beobachtet wird.

In weiterer bevorzugter Ausgestaltung des erfindungsgemäßen Verfahrens ist vorgesehen, dass ein Regelwerk zur Beschreibung von für die Überprüfung zu berücksichtigenden oder berücksichtigbaren Komponenten der Anlage zusammen mit Angaben zum Verhalten der Komponenten, und/oder zu der Konnektivität der Komponenten und/oder zu Sicherheitsaspekten, die für die Komponenten relevant sind, erstellt oder bereitgestellt wird, und die auf Zufall basierenden Fehlersituationen von dem Computerprogramm unter Rückgriff auf das Regelwerk verursacht werden. Als Verhalten von Komponenten kann beispielsweise ihr Start- und Stoppverhaltens sowie ihr Gut- und Fehlverhalten beschrieben werden. Das Computerprogramm kann auf das Regelwerk zugreifen und/oder das Regelwerk anwenden.

Da industrielle (Automatisierungs-)Anlagen üblicherweise nicht homogen aufgebaut sind, sondern sich aus einer Vielzahl von den unterschiedlichsten Einzelkomponenten und deren Verbindungen untereinander zusammensetzen, hat es sich als besonders geeignet erwiesen, zunächst ein Regelwerk zur Beschreibung insbesondere der Hard- und/oder Softwarekomponenten und deren Verhalten zu erstellen.

Ist ein Regelwerk vorgesehen, kann dieses weiterhin vorteilhaft umfassen:
- Angaben, welche Fehlerfälle an der jeweiligen Komponente auftreten können, bevorzugt klassifiziert nach Fehlertypen, und/oder
- Angaben, wie Fehlerfälle insbesondere durch das Computerprogramm technisch ausgelöst und/oder simuliert werden können, und/oder
- eine Menge von Fehleralgorithmen mit zugehörigen Parameter, die verschiedene Szenarien repräsentieren, die sich bevorzugt dahingehend unterscheiden, welche Fehlertypen und/oder Komponenten berücksichtigt werden sollen, und/oder wie viele Fehler gleichzeitig auftreten dürfen, und/oder wie das Zeitverhalten der Anlage und/oder eines Steuerungsprogramms dieser ist und/oder wie lange eine Fehlersituation anhalten soll, und/oder wie schnell im Anschluss an eine vorangegangene Fehlersituation die nächste Fehlersituation verursacht werden soll.

Die Fehleralgorithmen können dann insbesondere von dem Chaos-Softwaretool zufällig ausgewählt werden.

Insbesondere über die Menge an Fehleralgorithmen kann beispielsweise variiert werden, welche Fehlertypen oder Komponenten berücksichtigt werden sollen, wie viele Fehler gleichzeitig auftreten dürfen, wie das Zeitverhalten ist (beispielsweise sporadisch, zyklisch, permanent, ...), wie lange eine Fehlersituation anhalten soll bzw. darf, wie kurz nach dem Rückstellen einer Situation die nächste ausgelöst werden soll bzw. darf, usw.

Für Komponenten einer industriellen Automatisierungsanlage und zugehörige Fehlerfälle bzw. -zustände wie sie in einem Regelwerk für eine gegebene Anlage aufgenommen werden bzw. enthalten sein können, seien rein beispielhaft genannt:
Eine Weiche in einer Intralogistikanlage mit den Fehlerfällen:
1) geschlossen blockiert,
2) offen blockiert,
3) invertiertes Verhalten,
4) zeitverzögertes Verhalten,
5) taktverschobenes Verhalten

Eine Lichtschranke an einem Förderband mit den Fehlerzuständen:
1) immer an,
2) immer aus,
3) flackern,
4) prellen.

Ein Barcodeleser in einer Sortieranlage mit den Fehlerzuständen:
1) Träger löst nicht aus,
2) Barcode ist nicht lesbar,
3) Barcode ist falsch gelesen,
4) melden alter "gepufferter Barcodes",
5) prellen.

Es sei angemerkt, dass eine reale Anlage sowohl rein Hardware- als auch rein Software-basierte Komponenten, als auch Komponenten umfassen kann, die eine Kombination von (spezieller) Hardware und Software aufweisen. Die Komponenten einer simulierten Anlage liegen üblicherweise in Form von Software bzw. Softwarebausteinen vor, welche Repräsentanten bzw. "digitale Abbilder" realer Komponenten bilden.

Ein Fehleralgorithmus kann beispielsweise den Fall bzw. das Szenario repräsentieren, dass eine vorhandene Weiche mehrfach hintereinander auf und zu gemacht wird.

Auch kann ein Fehleralgorithmus einen Random-Generator, der beispielsweise eine Weiche zwischendurch immer mal auf und zu macht, repräsentieren.

Das Chaos-Softwaretool kann unter Rückgriff auf wenigstens einen Zufallsalgorithmus für eine oder mehrere Komponenten einen Fehleralgorithmus aus dem Regelwerk und darüber eine Fehlersituation bzw. einen Fehlerzustand wählen und real und/oder simuliert umsetzen, um die Anlage entsprechend zu "boykottieren". Das Chaos-Softwaretool kann insbesondere aus durch Fehleralgorithmen repräsentierten vorkonfigurierten Fehlersituationen jeweils eines bevorzugt zu beliebigen Zeitpunkten und/oder unabhängig von anderen Aspekten auswählen und umsetzen.

Eine weitere Ausführungsform des erfindungsgemäßen Verfahrens zeichnet sich dadurch aus, dass der Anlage eine Sicherheitseinrichtung zugeordnet ist oder die Anlage eine solche umfasst. Die Sicherheitseinrichtung ist dann bevorzugt ausgebildet und/oder eingerichtet, um einen zumindest bezüglich einiger Sicherheitsaspekte eigensicheren Betrieb der Anlage zu ermöglichen. Weiterhin bevorzugt ist die Sicherheitseinrichtung während der erfindungsgemäßen Überprüfung der Anlage aktiviert, so dass sie die Anlage, wenn unter Verwendung des Chaos-Softwaretools eine Fehlersituation ausgelöst wird, die zu einer gefährlichen Situation führen könnte oder führt, die Anlage von der Sicherheitseinrichtung in einen sicheren Zustand überführen kann oder überführt.

In der Regel ist eine technische Einrichtung, die zur Herstellung eines fehlersicheren Zustands dient (fehlergerichtetes System bzw. Sicherheitseinrichtung) laut Norm so aufgebaut, dass diese unabhängig von der normalen Automatisierungseinheit agiert und eigensicher ist. Das heißt, auch in demjenigen Falle, dass erfindungsgemäß von dem Chaos-Softwaretool eine Fehlersituation ausgelöst wird, welche zu einer gefährlichen Situation führt, kann ein fehlergerichtetes System dies erkennen und eine Anlage in einen fehlersicheren Zustand führen. In Kombination mit einer solchen Sicherheitseinrichtung kann der Einsatz des Chaos-Softwaretools besonders sicher gestaltet werden. Bei einer Sicherheitseinrichtung kann es sich beispielsweise um eine solche handeln, die die Norm EN 62061 erfüllt.

Insbesondere für den Fall, dass das Auslösen von solchen "unsicheren" bzw. "gefährlichen" Szenarien dennoch unerwünscht ist, beispielsweise, weil das Herausfahren aus einem fehlersicheren Zustand kostenintensiv sein kann, können in dem Regelwerk auch unerlaubte Fehlerzustände berücksichtigt werden.

Eine weitere Ausführungsform zeichnet sich entsprechend dadurch aus, dass das Regelwerk verbotene Fehlersituationen umfasst oder durch solche erweitert wird, und das Computerprogramm zunächst auf Zufall basierend eine Fehlersituation ermittelt, die ermittelte Fehlersituation mit den gemäß dem Regelwerk verbotenen Fehlersituationen abgleicht, und nur für den Fall, dass keine verbotene Fehlersituation ermittelt wurde, die Fehlersituation an der Anlage auslöst und/oder simuliert, andernfalls eine neue zufällige Fehlersituation ermittelt und wiederum mit den gemäß Regelwerk verbotenen Fehlersituationen abgleicht. Dieser Schritt kann zweckmäßiger Weise bei Bedarf so oft wiederholt werden, bis ein nicht verbotener Fehlerzustand auf Zufall basierend erhalten wird.

Weiterhin kann vorgesehen sein, dass in dem Regelwerk für wenigstens eine Komponente hinterlegt ist und/oder wird, dass diese nur unter bestimmten Bedingungen, insbesondre nur unter fachmännischer Aufsicht und/oder nur zu bestimmten Zeiten manipuliert werden darf. Auch können insbesondere besonders sensible bzw. besonders hochsicherheitsrelevante Komponenten von der Zufallsüberprüfung ausgenommen werden. Auf der anderen Seite ist es natürlich auch möglich, für eine oder mehrere Komponenten anzugeben, dass diese zu beliebigen Bedingungen, etwa zu beliebigen Zeiten, manipuliert werden dürfen.

Ist vorgesehen, dass ein Regelwerk verwendet wird, kann dieses auf eine oder auch mehrere Komponente(n) der Anlage geladen werden.

Auch hinsichtlich des Computerprogramms gilt, dass dieses auf wenigstens eine Komponente der Anlage geladen werden kann. Dies kann bevorzugt zusammen mit einem Regelwerk geschehen.

In weiterer besonders bevorzugter Ausführungsform wird ein Engineering-Tool bereitgestellt, auf das für die Erstellung des Regelwerkes zugegriffen werden kann bzw. zugegriffen wird. Das Erstellen des Regelwerkes kann beispielsweise durch einen Entwickler, Bauer und/oder Betreiber einer zu überprüfenden Anlage unter Verwendung des Engineering-Tools erfolgen. Insbesondere können aus dem Engineering-Tool Daten bzw. Informationen erhalten bzw. entnommen werden, auf Basis derer dann ein Regelwerk erstellt wird. Rein beispielhaft sei für ein Engineering-Tool das sogenannte TIA-Portal der Anmelderin genannt (siehe insbesondere https://assets.new.siemens.com/siemens/assets/public.15414888 70.9bb07edc-ea5a-4128-99ff-7f9d4ae623db.7801-09-tia-p-ipdf-de-181029-1.pdf).

Für die bzw. bei der Erstellung des Regelwerkes ist es sehr vorteilhaft, wenn Zugriff auf die zu überprüfende Anlage und/oder (sofern vorhanden) einen digitalen Zwilling einer solchen bestehen. Dies insbesondere, da die Informationen, welche Aktoren bzw. Sensoren in der Anlage verbaut sind, in der Regel aus dem Programm einer Steuerung, etwa einem SPS-Programm, ausgelesen bzw. ausgewertet werden können. Der direkte Zugriff auf die Anlage bietet somit eine besonders einfache Möglichkeit, Informationen u.a. zum Aufbau und Verhalten der Anlage zu erhalten.

Das erfindungsgemäße Verfahren zeichnet sich wie bereits eingangs erwähnt dadurch aus, zwei oder mehr Komponenten der Anlage über ein Kommunikationsnetzwerk insbesondere in Form eines Busses miteinander verbunden sind, und Daten, die von wenigstens einer Komponente an wenigstens eine weitere Komponente über das Kommunikationsnetzwerk zu senden sind, vor deren Übergabe an das Kommunikationsnetzwerk von dem Computerprogramm manipuliert werden. Dann gilt bevorzugt, dass das Manipulieren unmittelbar vor der Übergabe der Daten an das Kommunikationsnetzwerk stattfindet, wobei unter unmittelbar insbesondere zu verstehen ist, dass die Manipulation den letzten Schritt vor dem "Abschicken an das Kommunikationsnetzwerk" stattfindet.

Handelt es sich bei wenigstens einer Komponente der Anlage um eine insbesondere speicherprogrammierbare Steuerung, können von dieser zu sendende Daten, insbesondere Steuerungsdaten, beispielsweise an einem Zykluskontrollpunkt manipuliert werden.

Weiterhin kann vorgesehen sein, dass das Computerprogramm Daten in bzw. aus einer Anlage, insbesondere IO-Daten gemäß dem Regelwerk manipuliert, um das Regelwerk auf eine zu prüfende Anlage anzuwenden.

Eine Manipulation der Daten zum Erhalt von zufallsbasierten Fehlersituationen geschieht bevorzugt derart, dass insbesondere sämtliche Computerprogramme einer Anlage, die auf IO-Daten zugreifen (beispielsweise Steuerungsprogramm(e) /HMI-Skript(e), usw.), unverändert bleiben (können). Hierzu sind prinzipiell unterschiedliche Ansätze möglich.

Eine reine Software-Lösung ist beispielsweise dadurch gegeben, dass das Chaos-Softwaretool auf eines oder mehrere bereits vorhandene Geräte mit Zugriff auf ein vorhandenes Kommunikationsnetzwerk, wie etwa Peripherie-Gerät(e) und/oder bevorzugt speicherprogrammierbare Steuerung(en), bevorzugt gemeinsam mit einem anzuwendenden Regelwerk geladen wird.

Auch ist eine Soft- und Hardware-basierte Lösung denkbar. Beispielsweise kann ein bevorzugt speziell dafür entwickeltes System, das einen PC, insbesondere Industrie-PC umfassen oder durch einen solchen gegeben sein kann , an ein Kommunikationsnetzwerk einer zu überprüfenden Anlage angeschlossen werden, wobei das Chaos-Softwaretool dann insbesondere bereits auf dem System vorhanden ist und lediglich das Regelwerk noch auf dieses geladen werden muss bzw. wird.

Je nachdem, welche der genannten Varianten umgesetzt ist, können die Daten, insbesondere IO-Daten, entsprechend des Regelwerkes beispielsweise wie folgt manipuliert werden.

Auf einer insbesondere speicherprogrammierbaren Steuerung am Zykluskontrollpunkt, als letzter Schritt vor dem Abschicken auf den Bus.

Auf einem Peripheriegerät etwa vor dem Schreiben eines Aktors und nach dem Lesen eines Sensors auf/von der jeweiligen IO-Baugruppe.

Im Falle einer Soft- und Hardware-Lösung wird bevorzugt der Verkehr des Kommunikationsnetzwerkes (etwa Busses) an sich mitgehört und die entsprechenden Daten, insbesondere IO-Daten, werden auf Protokollebene manipuliert. Dazu wird die Netztopologie zweckmäßiger Weise derart geschnitten bzw. gewählt, dass jedwede IO-Kommunikation nur noch unter Nutzung eines Systems, auf welchem das Chaos-Diagnosetool dann bevorzugt vorhanden bzw. installiert ist, stattfindet, insbesondere durch das System geht, so dass Zugriff auf alle relevanten Daten besteht.

Hierfür kann ein erfindungsgemäßes System zum Einsatz kommen, welches weiter unten noch näher beschrieben wird.

Besonders bevorzugt findet unabhängig davon, wie die Manipulation stattfindet, diese für alle Teilnehmer des Kommunikationsnetzwerkes/Busses einer Anlage transparent statt, d. h. diese können unverändert verwendet werden.

Weiterhin ist es möglich, dass zusätzlich zu der erfindungsgemäßen, auf Zufall basierenden Überprüfung standardisierte Tests, wie sie bereits gemäß Stand der Technik insbesondere bei der Entwicklung von Anlagen durchgeführt werden, noch mit einbezogen werden. Rein beispielhaft für Standardtests seien sogenannte Unit-Tests genannt.

Die insbesondere zu einem Regelwerk zusammengefassten Informationen können von dem Computerprogramm genutzt werden. Das Computerprogramm kann beispielsweise auf einem mit der zu überprüfenden Anlage und/oder einem digitalen Zwilling einer solchen verbundenen Edge-Device laufen, und/oder Teil einer Anlagensimulation sein.

In weiterer Ausgestaltung kann vorgesehen sein, dass das Computerprogramm eine Anweisung an einen Benutzer ausgibt, die eine von dem Benutzer manuell auszuführende Manipulierungshandlung umfasst. Dies stellt eine Möglichkeit dar, Fehlerszenarien zu realisieren, die nicht (rein) elektronisch ausgelöst bzw. bedingt werden können. Als Beispiel einer Anweisung bzw. einen "Manipulationsvorschlag" für eine Person sei genannt, dass ein Werkstück, das etwa bereits eine Station durchlaufen hat, vom Band genommen und an anderer Stelle wieder aufgelegt wird.

Auch kann vorgesehen sein, dass das Computerprogramm alternativ oder zusätzlich zu einer realen Anlage eine simulierte Anlage manipuliert und wenigstens eine Fehlersituation realisiert, die in einer zu der Simulation korrespondierenden realen Anlage nicht auf elektronischen Wege auslösbar wäre. Als Beispiel für eine solche Fehlersituation sei genannt, dass ein Werkstück von einem Band fällt oder sich verkeilt. Dies kann etwa durch reine Software-Befehle oder Datenmanipulation oder Eingriffnahme auf eine Spannungsversorgung nicht oder nicht ohne weiteres realisiert werden. Insbesondere, um auch solche Szenarien abdecken und berücksichtigen zu können, kann es sehr vorteilhaft sein, eine simulierte Anlage bzw. einen digitalen Zwilling einer Anlage bereitzustellen.

Ein weiterer Gegenstand der Erfindung ist ein Computerprogramm, das Programmcodemittel zur Durchführung der Schritte des erfindungsgemäßen Verfahrens umfasst.

Das erfindungsgemäße Computerprogramm kann mehrere Module umfassen, beispielsweise ein Tool bzw. ein Modul zur Erstellung eines Regelwerkes, insbesondere ein Engineering-Tool, und ein Runtime-Tool bzw. ein Runtime-Modul, welches bevorzugt eingerichtet ist, um reale Komponenten einer bereitgestellten realen Anlage und/oder von solchen stammende Daten und/oder simulierte Komponenten einer bereitgestellten simulierten Anlage und/oder von solchen stammende Daten unter Verwendung wenigstens eines Zufallsalgorithmus insbesondere im laufenden Betrieb derart zu manipulieren, dass auf Zufall basierend Fehlersituationen in der realen und/oder der simulierten Anlage verursacht werden. Bei dem Runtime-Tool kann es sich insbesondere um das Chaos-Softwaretool handeln.

Es sei angemerkt, dass das Chaos-Softwaretool alternativ dazu, dass es nur ein Modul, also nur einen Teil eines Ausführungsbeispiels eines erfindungsgemäßen Computerprogramms darstellt, auch ein solches bilden kann.

Gegenstand der Erfindung ist ferner ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Schließlich betrifft die Erfindung ein System zur Durchführung des erfindungsgemäßen Verfahrens, umfassend wenigstens einen Anschluss, insbesondere zur Verbindung mit einem Kommunikationsnetzwerk, wenigstens einen Prozessor und wenigstens einen Speicher, auf dem ein erfindungsgemäßes Computerprogramm abgelegt/gespeichert ist.

Ein erfindungsgemäßes System weist bevorzugt wenigstens einen Netzwerkport zur Verbindung mit einem Kommunikationsnetzwerk einer industriellen Anlage, etwa einem Bus-System auf. Es ist ferner bevorzugt derart ausgebildet, dass es schnellen, beispielsweise über PROFINET erfolgenden Datenverkehr "mithören" und/oder mit einem Engineering-Tool kommunizieren kann, bevorzugt einem Engineering-Tool, dass für die Planung der zu überprüfenden Anlage(n) zum Einsatz kommt bzw. gekommen ist. Es weist entsprechend bevorzugt wenigstens eine Schnittstelle zur Verbindung mit einem solchen Tool auf.

Das erfindungsgemäße System kann auch durch ein sogenanntes Edge-Gerät (englisch: Edge-Device) gegeben sein. Ein Edge-Gerät zeichnet sich insbesondere dadurch aus, dass es über Cloud-Zugriff verfügt, also bevorzugt wenigstens eine Schnittstelle zur Verbindung mit einer Cloud aufweist. In einer Cloud kann beispielsweise ein digitaler Zwilling einer Anlage bereitstehen. Über ein insbesondere auf dem Edge-Device vorhandenes erfindungsgemäßes Computerprogramm kann dann auch der digitale Zwilling manipuliert werden.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin zeigt jeweils in rein schematischer Darstellung
Figur 1 eine industrielle Automatisierungsanlage, die gemäß einem Ausführungsbeispiel des erfindungsgemäßen Verfahrens überprüft wird; und
Figur 2 eine Steuerung der Anlage aus FIG 1, die mit Sensoren/Aktoren verbunden ist und mit der unter Verwendung eines Chaos-Softwaretools auf Zufall basierend eine Fehlersituation ausgelöst wird.

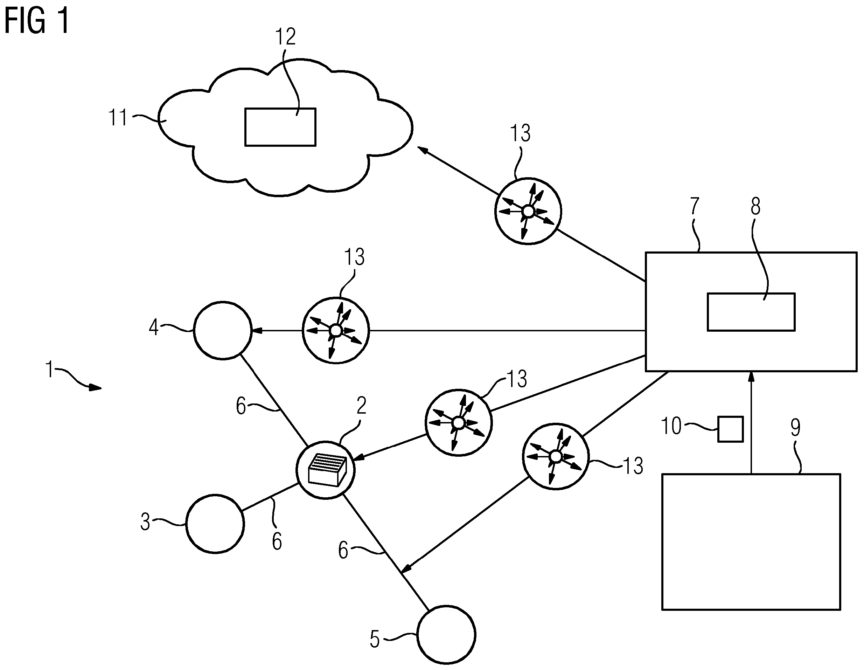

Die Figur 1 zeigt in rein schematischer Teildarstellung eine industrielle, technische Automatisierungsanlage, in welcher automatisiert in der Figur nicht weiter dargestellte Güter bzw. Gegenstände produziert bzw. weiterverarbeitet werden.

In der Figur 1 sind beispielhaft einige Komponenten der Automatisierungsanlage 1 gezeigt, konkret ein Bus 2, eine Produktionslinienstufe 3, ein Montagemodul 4 und ein Transportmodul 5. Die Produktionslinienstufe 3, das Montagemodul 4 und das Transportmodul 5 umfassen jeweils Aktoren und Sensoren sowie eine eigene Steuerung. Die Produktionslinienstufe 3, das Montagemodul 4 und das Transportmodul 5 sind jeweils an den Bus 2 angeschlossen. Die Busverbindung 6 ist jeweils schematisch durch eine Linie angedeutet. Über den Bus 2 kann in an sich bekannter Weise eine Datenübertragung zwischen angeschlossenen Teilnehmern erfolgen.

Weiterhin gezeigt ist ein Edge-Device 7, welches ein Ausführungsbeispiel eines erfindungsgemäßen Systems darstellt. Dieses umfasst einen Prozessor, einen Speicher und eine Schnittstelle zur Verbindung mit einem Kommunikationsnetzwerk, konkret dem Bus 2 der Anlage 1, über den die Komponenten dieser Daten austauschen können. Vorliegend ist das Edge-Device 7 durch einen Industrie-PC gegeben. Auf dem Edge-Device 87 ist ein Chaos-Softwaretool 8 gespeichert. Das Chaos-Softwaretool 8 bildet bei dem hier beschriebenen Ausführungsbeispiel eines von zwei Modulen eines Ausführungsbeispiels eines erfindungsgemäßen Computerprogrammes.

Das zweite Modul ist durch ein Engineering-Tool 9 gegeben, in dem von einem in den Figuren nicht dargestellten Benutzer ein Regelwerk 10 zur Beschreibung der Anlage 1 und eines in einer Cloud 11 bereitstehenden digitalen Zwillings 12 dieser erstellt werden kann. Bei dem Engineering-Tool 9 handelt es sich vorliegend um das auf die Anmelderin zurückgehende TIA-Portal, wobei dies lediglich beispielhaft zu verstehen ist, und prinzipiell auch andere Engineering-Tools verwendet werden können.

Das Engineering-Tool 9 ist mit dem Edge-Device 7 derart verbunden, dass ein Regelwerk 10, nachdem es von einem Benutzer erstellt wurde, an das Edge-Device 7 übergeben werden kann. Eine entsprechende Schnittstelle ist bei dem Edge-Device 7 und dem Engineering-Tool 9 vorhanden.

Das Edge-Device 7 hat andererseits Zugriff auf die Cloud 11, in welcher der digitaler Zwilling 12 der Automatisierungsanlage 1 bereitsteht.

Mit der Bezugsziffer 13 versehene Elemente deuten in der Figur 1 an, dass mittels des Edge-Devices 7, konkret unter Verwendung des darauf gespeicherten Chaos-Softwaretools 8 Fehlersituationen 13 sowohl in der realen Automatisierungsanlage 1 als auch in dem digitalen Zwilling 12 in der Cloud 11 ausgelöst werden können bzw. werden.

Zur Überprüfung der Automatisierungsanlage 1 und des digitalen Zwillings 12 wird ein Ausführungsbeispiel des erfindungsgemäßen Verfahrens durchgeführt.

Dabei werden reale Komponenten 2-6 der bereitgestellten realen Anlage 1 und von solchen stammende Daten sowie simulierte Komponenten der bereitgestellten simulierten Anlage 12 und von solchen stammende Daten unter Verwendung des Chaos-Softwaretools 8, welches hierfür wenigstens einen Zufallsalgorithmus umfasst, im laufenden Betrieb der Anlage 1 und des Zwillings 12 derart manipuliert, dass auf Zufall basierend Fehlersituationen in der realen Anlage 1 und der simulierten Anlage 12 verursacht werden.

Es sei angemerkt, dass eine reale Anlage 1 sowohl rein Hardware- als auch rein Software-basierte Komponenten, als auch Komponenten umfassen kann, die eine Kombination von (spezieller) Hardware und Software aufweisen. Alle diese Arten von Komponenten können bzw. werden auf Zufall basierend überprüft. Die Komponenten einer simulierten Anlage liegen üblicherweise in Form von Software bzw. Softwarebausteinen vor, welche Repräsentanten bzw. "digitale Abbilder" realer Komponenten bilden. Sämtliche dieser Arten von Komponenten können im Rahmen des erfindungsgemäßen Verfahrens auf Zufall basierend "boykottiert" werden. Weiterhin sein angemerkt, dass neben den in Figur 1 rein beispielhaft gezeigten Komponenten 2-6 natürlich weitere Komponenten der Anlage 1 manipuliert werden können.

Die erfindungsgemäße Verursachung von Zufallsfehlern erfolgt dabei unter Rückgriff auf das Regelwerk 10, welches entsprechend zuvor, in einem ersten Schritt zu erstellen ist.

Das Regelwerk 10 wird, da industrielle Automatisierungsanlagen 1 üblicherweise nicht homogen aufgebaut sind, sondern sich, wie das in der Figur 1 dargestellte Beispiel, aus einer Vielzahl aus unterschiedlichsten Einzelkomponenten 2-56 und deren Verbindung untereinander zusammensetzen, zur Beschreibung der Hard- und Softwarekomponenten 2-6 sowohl der realen Automatisierungsanlage 1 als auch des digitalen Zwillings 12 und deren Verhalten erstellt.

Das Regelwerk 11 beschreibt dabei vorliegend Komponenten 2-6 der Anlage 1 und des Zwillings 12 zusammen mit Angaben zum Verhalten der jeweiligen Komponente, zu deren Konnektivität und zu Sicherheitsaspekten, die für die jeweilige Komponente 2-6 relevant sind. Als Komponenten-Verhalten wird im Rahmen des hier beschriebenen Ausführungsbeispiels das Start- und Stoppverhalten sowie das Gut- und Fehlverhalten beschrieben.

Das Regelwerk 10 umfasst weiterhin Angaben, welche Fehlerfälle an der jeweiligen Komponente 2-6 auftreten können, wobei die Fehlerfälle nach Fehlertypen klassifiziert sind, sowie Angaben, wie Fehlerfälle durch das Chaos-Software-Tool 8 technisch ausgelöst und/oder simuliert werden können.

Darüber hinaus umfasst das Regelwerk 10 eine Menge von Fehleralgorithmen und zugehörigen Parametern, die verschiedene Szenarien repräsentieren, die sich dahingehend unterscheiden, welche Fehlertypen sowie Komponenten 2-6 berücksichtigt werden sollen, wie viele Fehler gleichzeitig auftreten dürfen, wie das Zeitverhalten ist, wie lange eine Fehlersituation anhalten soll und wie schnell im Anschluss an eine vorangegangene Fehlersituation die nächste Fehlersituation verursacht werden soll bzw. darf. Über die Menge an Fehleralgorithmen kann entsprechend variiert werden, welche Fehlertypen oder Komponenten zu berücksichtigen sind, wie viele Fehler gleichzeitig auftreten dürfen, wie das Zeitverhalten ist (beispielsweise sporadisch, zyklisch, permanent, ...), wie lange eine Fehlersituation anhalten soll bzw. wie kurz nach dem Rückstellen einer Situation die nächste ausgelöst werden soll.

Vorliegend umfasst das Regelwerk 10 unter anderem, dass eine in der Figur 1 nicht weiter dargestellte Lichtschranke an einem Förderband des Transportmoduls 5 der Anlage 1 vorhanden ist und sich diese durch die Fehlerzustände
1) immer an,
2) immer aus,
3) flackern,
4) prellen
auszeichnet. Weiterhin gelistet ist ein Barcodeleser in einer Sortieranlage, vorliegend des Montagemoduls 4 der sich durch folgende Fehlerzustände auszeichnet
1) Träger löst nicht aus,
2) Barcode ist nicht lesbar,
3) Barcode ist falsch gelesen,
4) melden alter "gepufferter Barcodes",
5) prellen.

Das Regelwerk 10 umfasst vorliegend auch die Angabe verbotener Fehlersituationen.

Dies ist der Fall, da die Anlage 1, konkret eine speicherprogrammierbare Steuerung dieser, eine Sicherheitseinrichtung umfasst.

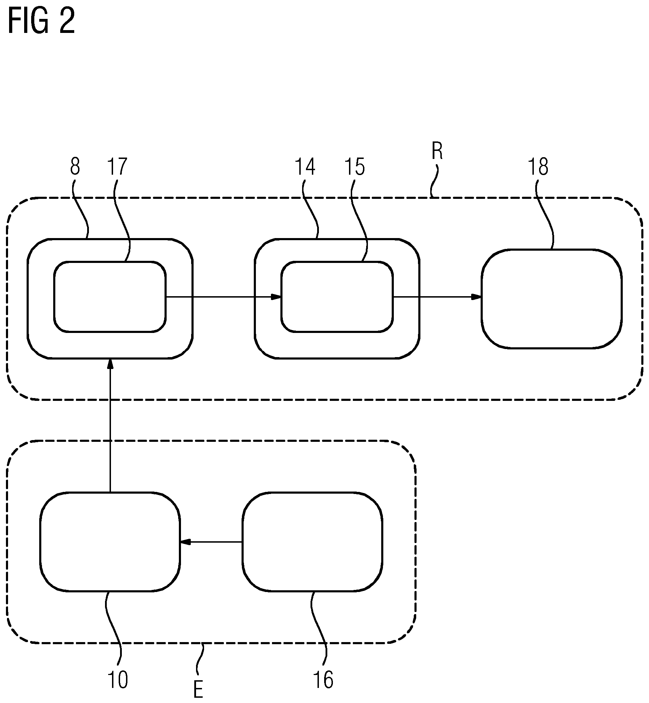

Die speicherprogrammierbare Steuerung 14 mit der Sicherheitseinrichtung 15 ist in der Figur 1 nicht erkennbar, jedoch der Figur 2 - jeweils nur rein schematisch als Blockelement - dargestellt. Es sei angemerkt, dass in der Figur 2 der Ablauf zur Runtime R, also der Ablauf während des laufenden Betriebs der Anlage 1, 12, und unten das zeitlich vorgelagerte Engineering E, konkret die Erstellung des Regelwerkes 10 dargestellt und grafisch durch Umrandungen mit gestrichelter Linie voneinander abgesetzt sind.

Die Sicherheitseinrichtung 15, die auch als Fehler- oder kurz F-System bezeichnet werden kann, ist ausgebildet und eingerichtet, um einen zumindest bezüglich einiger Sicherheitsaspekte eigensicheren Betrieb der Anlage 1 zu ermöglichen. Konkret dient sie zur Herstellung eines fehlersicheren Zustands (fehlergerichtetes System) und ist laut Norm, vorliegend der Norm EN 62061 so aufgebaut, dass diese unabhängig von der normalen Steuerung 14 agiert und eigensicher ist. Sie sorgt insbesondere dafür, dass für den Fall, dass bestimmte unzulässige Zustände erreicht bzw. bestimmte Parameter überschritten werden, die Anlage 1 in einen sicheren Zustand überführt wird.

Die Sicherheitseinrichtung 15 ist während der erfindungsgemäßen Überprüfung der Anlage 1 aktiviert, so dass sie die Anlage 1, wenn unter Verwendung des Chaos-Softwaretools 8 eine Fehlersituation ausgelöst wird, die zu einer gefährlichen Situation führen könnte oder führt, die Anlage 1 automatisch in einen sicheren Zustand überführen wird.

Vorliegend ist das Auslösen von solchen "unsicheren" bzw. "gefährlichen" Szenarien dennoch unerwünscht, weil das Herausfahren aus einem fehlersicheren Zustand zeit- bzw. kostenintensiv ist. Um das Erreichen solcher zu vermeiden, sind in dem Regelwerk 11 unerlaubte Fehlerzustände berücksichtigt.

Konkret wurde bei dessen Erstellung ein Sicherheitsplan 16 der Anlage 1, welcher die Anforderungen der Norm EN 62061 erfüllt, berücksichtigt. Dies ist - wiederum nur schematisch - in Figur 2 angedeutet, in welcher von dem Sicherheitsplan 16 ein Pfeil zu dem Regelwerk 10 zeigt.

Weiterhin kann in dem Regelwerk 10 - bei Bedarf - für eine oder mehrere Komponenten 2-6 hinterlegt werden, dass diese nur unter bestimmten Bedingungen, beispielsweise nur unter fachmännischer Aufsicht und/oder nur zu bestimmten Zeiten manipuliert werden dürfen. Auch können besonders sensible bzw. besonders hochsicherheitsrelevante Komponenten 2-6 von der Zufallsüberprüfung per se ausgenommen werden. Auf der anderen Seite ist es natürlich auch möglich, für eine oder mehrere Komponenten 2-6 anzugeben, dass diese zu beliebigen Bedingungen, etwa zu beliebigen Zeiten und/oder ohne Aufsicht, manipuliert werden dürfen.

Es sei angemerkt, dass es für die Erstellung des Regelwerkes 10 sehr vorteilhaft ist, wenn - wie vorliegend über das TIA-Portal 9 - direkter Zugriff auf die zu überprüfende Anlage 1 und ggf. den digitalen Zwilling 12 besteht. Dies insbesondere, da die Informationen, welche Aktoren bzw. Sensoren in der Anlage 1 verbaut sind, in der Regel aus dem Programm der Steuerung 14, dem SPS-Programm, ausgelesen bzw. ausgewertet werden können. Der direkte Zugriff auf die Anlage 1 bietet somit eine besonders einfache Möglichkeit, Informationen u.a. zum Aufbau und Verhalten der Anlage 1 zu erhalten, wie sie für das Regelwerk 10 erforderlich sind.

Im Anschluss an die Erstellung des Regelwerkes 11 und dessen Übergabe an das Edge-Gerät 7 kann der erfindungsgemäße, auf Zufall basierenden "Boykott" der Anlage(n) 1, 13 durch das Chaos-Softwaretool 8 erfolgen. Dabei wird von dem Chaos-Softwaretool 8, konkret unter Rückgriff bzw. Verwendung wenigstens eines von diesem umfassten Zufallsalgorithmus aus dem Regelwerk 11 ein Fehleralgorithmus ausgewählt, der eine Fehlersituation repräsentiert.

Wurde von dem Chaos-Softwaretool 8 auf Zufall basierend eine Fehlersituation ermittelt (also ein Fehleralgorithmus ausgewählt) wird dieser zunächst mit den gemäß dem Regelwerk 10 verbotenen Fehlersituationen abgeglichen. Hierzu umfasst das Chaos-Softwaretool 8 eine Sicherheitskomponente 17 (siehe Figur 2). Nur für den Fall, dass kein verbotener Fehlersituation ermittelt wurde, wird die Fehlersituation an der Anlage 1 und/oder der Anlage 12 auslöst und/oder simuliert, andernfalls wird eine neue zufällige Fehlersituation ermittelt und wiederum mit den gemäß Regelwerk 10 verbotenen Fehlersituationen abgleicht. Dies wird ggf. so oft wiederholt, bis ein nicht verbotener Fehlerzustand auf Zufall basierend erhalten wird.

Liegt ein nicht verbotener Fehleralgorithmus vor, wird dieser ausgeführt, um die entsprechende Fehlersituation bzw. den entsprechenden Fehler auszulösen bzw. umzusetzen. Lediglich beispielhaft sei genannt, dass Daten auf den Bus 2 geschickt werden, die ein mehrfaches Öffnen und Schließen einer Schranke anzeigen bzw. simulieren.

Es werden sowohl Komponenten 2-6, 14 der realen Anlage 1 und des digitalen Zwillings 12 manipuliert, als auch Daten dieser. Es sei angemerkt, dass unter der Manipulation einer Komponente insbesondere auch das (zufällige) Abschalten dieser zu verstehen ist. Vorliegend werden Daten, die von der Steuerung 14 der Anlage 1 an Aktoren gesendet werden und Daten, die von Sensoren empfangen werden, manipuliert. Es sei angemerkt, dass die Aktoren und Sensoren der Anlage 1 in Figur 1 nicht erkennbar, jedoch in Figur 2 rein schematisch durch ein mit dem Bezugszeichen 18 versehenes Blockelement dargestellt sind. Ebenfalls in der Figur 2 markiert ist.

Dabei wird von dem Edge-Device 7 der Datenverkehr in dem Kommunikationsnetzwerk der Anlage 1, also der Busverkehr, mitgehört und eine zufallsbasierte Manipulation (auch) von Daten erfolgt auf Protokollebene.

Es sei angemerkt, dass alternativ oder zusätzlich dazu, dass das Edge-Device 7 die Daten mithört und auf Protokollebene manipuliert, eine Manipulation der Daten auch auf der SPS 14, insbesondere am Zykluskontrollpunkt, und/oder an Peripherie-/IO-Geräten, insbesondere vor dem Schreiben eines Aktors und/oder nach dem Lesen eines Sensors möglich ist. Hierfür ist dann insbesondere vorgesehen, dass das Chaos-Softwaretool 8 auf der SPS 14 und/der den betreffenden Peripherie-/IO-Geräten gespeichert ist bzw. wird, zweckmäßiger Weise zusammen mit dem Regelwerk 10. Die Manipulation der Daten erfolgt bevorzugt jeweils als letzter Schritt vor dem "Abschicken auf dem Bus". Auf ein zusätzliches Edge-Device 7 kann dann auch verzichtet werden.

Die Manipulation der Daten findet dabei für alle Netzwerk-/Busteilnehmer transparent statt.

Insbesondere in der simulierten Anlage 12 kann das Chaos-Softwaretool 8 auch durch die Manipulation der Daten Verwirrung stiften. Nachfolgend ist ein Auszug aus einem rein beispielhaften Regelwerk 11 für einen Cloud-Service wiedergegeben:

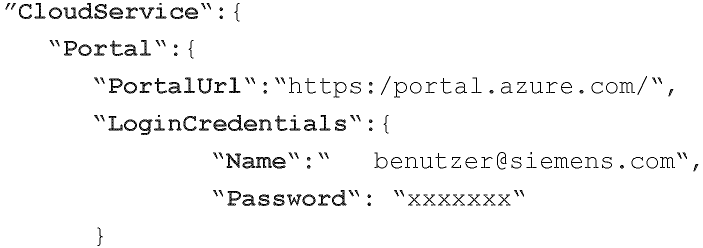

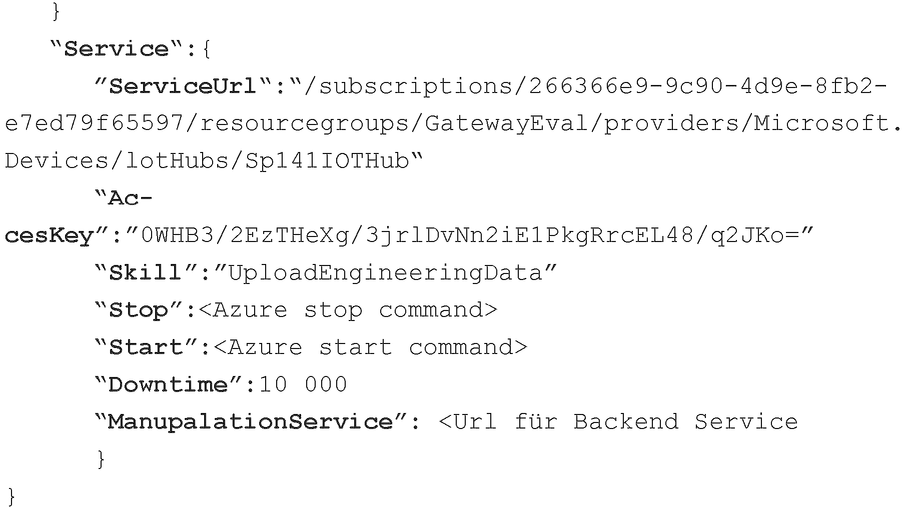

Enthalten sind die Zugangsdaten zum Cloudportal und zum Service selbst sowie die Manipulationsmöglichkeiten, d.h. das Stoppen des Services, wieder starten oder einen anderen Backendservice der zur Manipulation dient.

Es kann auch passieren, dass das Chaos-Softwaretool 8 eine oder mehrere Anweisungen an einen Benutzer ausgibt, die eine von dem Benutzer manuell auszuführende Manipulierungshandlung umfasst. Dies stellt eine Möglichkeit dar, Fehlerszenarien zu realisieren, die nicht (rein) elektronisch ausgelöst bzw. bedingt werden können. Als Beispiel einer Anweisung bzw. einen "Manipulationsvorschlag" für eine Person sei genannt, dass ein Werkstück, dass etwa bereits eine Station durchlaufen hat, von der Person vom Band genommen und an anderer Stelle wieder aufgelegt wird. Entsprechende Anweisungen können auf einer Anzeigeeinrichtung, etwa in Form eines Bildschirms, an einen Benutzer ausgegeben werden.

Auch kann vorgesehen sein, dass das Chaos-Softwaretool 8 wenigstens eine Fehlersituation in der simulierten Anlage 12 realisiert, die in der realen Anlage 1 nicht auf elektronischem Wege auslösbar ist. Als Beispiel für eine solche Fehlersituation sei genannt, dass ein Werkstück von einem Band fällt oder sich verkeilt. Dies kann etwa durch reine Software-Befehle oder Datenmanipulation oder Eingriffnahme auf eine Spannungsversorgung nicht oder nicht ohne weiteres realisiert werden. Insbesondere, um auch solche Szenarien abdecken und berücksichtigen zu können, kann es sehr vorteilhaft sein, eine Anlagensimulation 12 zusätzlich zu einer realen Anlage 1 bereitzustellen, wie es vorliegend der Fall ist.

Die Auswirkung der jeweils durch das Chaos-Softwaretool 8 unter Rückgriff auf das Regelwerk 10 ausgelösten Fehlersituation auf den Betrieb der realen 1 und/oder der simulierten Anlage 12 wird von einer Person beobachtet und/oder elektronisch, insbesondere durch das Chaos-Softwaretool 8 aufgezeichnet werden. Die reale 1 Anlage und/oder die simulierte Anlage 12 und/oder deren Steuerung(sprogramm) kann nach Bedarf angepasst werden. Es können insbesondere dabei erkannte Fehler bzw. Probleme, etwa im Aufbau und/oder der Steuersoftware und/oder der Verbindung von Komponenten behoben werden.

Unter Nutzung des auf Zufall basierenden, Tool-unterstützten Chaosverfahrens wird mit vergleichsweise geringem Aufwand eine besonders umfangreiche, zuverlässige Überprüfung auch komplexer industrieller Anlagen 1 möglich, dies sowohl während einer Simulationsphase als auch während der Inbetriebnahme. Da erfindungsgemäß auf Zufall basierend Komponenten 2-6, 14 einer Anlage 1 und/oder von solchen stammende Daten manipuliert werden, sind resultierende Fehlerszenarien nicht, wie gemäß dem Stand der Technik auf von einem Betreiber bzw. Ingenieuren gezielt ausgewählte bzw. bedachte Szenarien beschränkt, sondern es können quasi beliebige Szenarien verursacht und somit abgedeckt werden. So wird es erstmals möglich, auch Fehler oder Ausfallgründe in einer industriellen Anlage 1 zu finden, die beim Engineering nicht bedacht wurden bzw. bedacht werden konnten, und/oder, die sich aus der Komplexität der Anlage 1 ergeben. Dies stellt einen erheblichen Vorteil gegenüber dem Stand der Technik dar.

Obwohl die Erfindung im Detail durch das bevorzugte Ausführungsbeispiel näher illustriert und beschrieben wurde, so ist die Erfindung nicht durch die offenbarten Beispiele eingeschränkt. Die Erfindung ist im beigefügten Anspruchssatz definiert.

## Patentansprüche

1. Verfahren zur Überprüfung einer industriellen Anlage (1, 12), insbesondere Automatisierungsanlage,
wobei reale Komponenten (2-6, 14) einer bereitgestellten realen Anlage (1) oder von solchen stammende Daten oder simulierte Komponenten einer bereitgestellten simulierten Anlage (12) oder von solchen stammende Daten unter Verwendung eines Computerprogramms (8) insbesondere im laufenden Betrieb derart manipuliert werden, dass auf Zufall basierend Fehlersituationen in der realen und/oder der simulierten Anlage (1, 12) verursacht werden,
**dadurch gekennzeichnet, dass**
zwei oder mehr Komponenten (2-6, 14) der Anlage (1, 12) über ein Kommunikationsnetzwerk insbesondere in Form eines Busses miteinander verbunden sind, und Daten, die von wenigstens einer Komponente (2-6, 14) an wenigstens eine weitere Komponente (2-6, 14) über das Kommunikationsnetzwerk zu senden sind, vor deren Übergabe an das Kommunikationsnetzwerk von dem Computerprogramm (8) manipuliert werden,
wobei das Computerprogramm (8) zur Manipulation der Daten wenigstens einen Zufallsalgorithmus verwendet und auf einem mit dem Kommunikationsnetzwerk verbundenen Edge-Device, insbesondere einem Industrie-PC, ausgeführt wird.

2. Verfahren nach Anspruch 1,
**dadurch gekennzeichnet, dass**
die Auswirkung auf den Betrieb der realen oder der simulierten Anlage (1, 12) erfasst und die reale oder die simulierte Anlage (1, 12) oder deren Steuerung nach Bedarf angepasst wird, insbesondere erkannte Probleme oder Fehler behoben werden.

3. Verfahren nach Anspruch 1 oder 2,
**dadurch gekennzeichnet, dass**
ein Regelwerk (10) zur Beschreibung von für die Überprüfung zu berücksichtigenden oder berücksichtigbaren Komponenten (2-6, 14) der Anlage (1, 12) zusammen mit Angaben zum Verhalten der Komponenten oder zu der Konnektivität der Komponenten (2-6, 14) oder zu Sicherheitsaspekten, die für die Komponenten relevant sind, erstellt oder bereitgestellt wird, und die auf Zufall basierenden Fehlersituationen von dem Computerprogramm (8) unter Rückgriff auf das Regelwerk (10) verursacht werden.

4. Verfahren nach Anspruch 3,
**dadurch gekennzeichnet, dass**
das Regelwerk (10) weiterhin umfasst:
- Angaben, welche Fehlerfälle an der jeweiligen Komponente auftreten können, bevorzugt klassifiziert nach Fehlertypen, oder
- Angaben, wie Fehlerfälle insbesondere durch das Computerprogramm (8) technisch ausgelöst und/oder simuliert werden können, oder
- eine Menge von Fehleralgorithmen mit zugehörigen Parametern, die verschiedene Szenarien repräsentieren, die sich bevorzugt dahingehend unterscheiden, welche Fehlertypen oder Komponenten (2-6, 14) berücksichtigt werden sollen, oder wie viele Fehler gleichzeitig auftreten dürfen, oder wie das Zeitverhalten ist oder wie lange eine Fehlersituation anhalten soll, oder wie schnell im Anschluss an eine vorangegangene Fehlersituation die nächste Fehlersituation verursacht werden soll.

5. Verfahren nach Anspruch 3 oder 4,
**dadurch gekennzeichnet, dass**
das Regelwerk (10) verbotene Fehlersituationen umfasst oder durch solche erweitert wird, und das Computerprogramm (8) zunächst auf Zufall basierend eine Fehlersituation ermittelt, die ermittelte Fehlersituation mit den gemäß dem Regelwerk (10) verbotenen Fehlersituationen abgleicht, und nur für den Fall, dass keine verbotene Fehlersituation ermittelt wurde, die Fehlersituation an der Anlage (1, 12) auslöst oder simuliert, andernfalls eine neue zufällige Fehlersituation ermittelt und wiederum mit den gemäß Regelwerk (10) verbotenen Fehlersituationen abgleicht.

6. Verfahren nach einem der Ansprüche 3 bis 5,
**dadurch gekennzeichnet, dass**
in dem Regelwerk (10) für wenigstens eine Komponente (2-6, 14) hinterlegt ist oder wird, dass diese nur unter bestimmten Bedingungen, insbesondere nur unter fachmännischer Aufsicht und/oder nur zu bestimmten Zeiten, manipuliert werden darf.

7. Verfahren nach einem der Ansprüche 3 bis 6,
**dadurch gekennzeichnet, dass**
das Regelwerk (10) und/oder Computerprogramm (8) auf wenigstens eine Komponente der Anlage (1, 12) geladen wird.

8. Verfahren nach einem der Ansprüche 3 bis 7,
**dadurch gekennzeichnet, dass**
ein Engineering-Tool (9) bereitgestellt wird, in dem das Regelwerk (10) erstellt werden kann oder erstellt wird.

9. Verfahren nach einem der vorhergehenden Ansprüche,
**dadurch gekennzeichnet, dass**
es sich bei wenigstens einer Komponente (2-6, 14) der Anlage um eine insbesondere speicherprogrammierbare Steuerung (14) handelt, und von dieser zu sendende Daten an einem Zykluskontrollpunkt manipuliert werden.

10. Verfahren nach einem der Ansprüche 3 bis 8 und einem der Ansprüche 1 oder 9,
**dadurch gekennzeichnet, dass**
das Computerprogramm (8) die Daten gemäß dem Regelwerk (10), insbesondere gemäß den Angaben, wie Fehlersituationen technisch ausgelöst und/oder simuliert werden können, manipuliert.

11. Verfahren nach einem der vorhergehenden Ansprüche,
**dadurch gekennzeichnet, dass**
der Anlage (1) eine Sicherheitseinrichtung (15) zugeordnet ist oder die Anlage (1) eine solche umfasst, wobei die Sicherheitseinrichtung (15) ausgebildet oder eingerichtet ist, um einen zumindest bezüglich einiger Sicherheitsaspekte eigensicheren Betrieb der Anlage (1) zu ermöglich, und die Sicherheitseinrichtung (15) während der Überprüfung der Anlage (1) aktiviert ist, so dass sie die Anlage (1), wenn unter Verwendung des Computerprogramms (8) eine Fehlersituation ausgelöst wird, die zu einer gefährlichen Situation führen könnte oder führt, die Anlage (1) von der Sicherheitseinrichtung (15) automatisch in einen sicheren Zustand überführt wird.

12. Verfahren nach einem der vorhergehenden Ansprüche,
**dadurch gekennzeichnet, dass**
das Computerprogramm (8) eine Anweisung an einen Benutzer ausgibt, die eine von dem Benutzer manuell auszuführende Manipulierungshandlung umfasst.

13. Verfahren nach einem der vorhergehenden Ansprüche,
**dadurch gekennzeichnet, dass**
das Computerprogramm (8) alternativ oder zusätzlich zu einer realen Anlage (1) eine simulierte Anlage (12) manipuliert und wenigstens eine Fehlersituation realisiert, die in einer zu der Simulation korrespondierenden reale Anlage (1) nicht auf elektronischem Wege auslösbar wäre.

14. Computerprogramm (8, 9) umfassend Programmcode-Mittel und zumindest einen Zufallsalgorithmus, das so angepasst ist, dass es das Verfahren aus einem der Ansprüche 1 bis 13 beim Ablaufen auf einem Computer ausführt.

15. Computerlesbares Medium, das das Computerprogramm nach Anspruch 14 umfasst.

16. System (7) zur Durchführung des Verfahrens nach einem der Ansprüche 1 bis 13, umfassend ein Edge-Device, insbesondere einen Industrie-PC, mit wenigstens einem Anschluss, insbesondere zur Verbindung mit einem Kommunikationsnetzwerk, wenigstens einem Prozessor und wenigstens einem Speicher,
das System mit zwei oder mehr Komponenten (2-6, 14) einer Anlage (1, 12) und dem Edge-Device, die über ein Kommunikationsnetzwerk, insbesondere in Form eines Busses, miteinander verbunden sind, **dadurch gekennzeichnet,**
**dass** auf dem Speicher das Computerprogramm (8, 9) nach Anspruch 14 abgelegt ist das System (7) zur Ausführung dieses Computerprogramms (8, 9) ausgestaltet ist,
**dass** das Computerprogramm (8, 9) wenigstens einen Zufallsalgorithmus umfasst und dazu eingerichtet ist, von realen Komponenten (2-6, 14) einer bereitgestellten realen Anlage (1) stammende Daten oder von simulierten Komponenten einer bereitgestellten simulierten Anlage (12) stammende Daten auf Zufall basierend derart zu manipulieren, dass Fehlersituationen in der realen und/oder der simulierten Anlage (1, 12) verursacht werden,
, und
**dass** vorgesehen ist, dass die Daten, die von wenigstens einer Komponente (2-6, 14) an wenigstens eine weitere Komponente (2-6, 14) über das Kommunikationsnetzwerk zu senden sind, vor deren Übergabe an das Kommunikationsnetzwerk von dem Computerprogramm (8) manipuliert werden.

## Claims

1. Method for reviewing an industrial installation (1, 12), in particular automation installation,
wherein real components (2-6, 14) of a provided real installation (1) or data originating therefrom or simulated components of a provided simulated installation (12) or data originating therefrom are manipulated with the use of a computer program (8), in particular during ongoing operation, in such a manner that error situations based on chance are caused in the real and/or the simulated installation (1, 12), **characterised in that**
two or more components (2-6, 14) of the installation (1, 12) are interconnected via a communication network, in particular in the form of a bus, and data, which is to be sent by at least one component (2-6, 14) to at least one further component (2-6, 14) via the communication network, is manipulated before its handover to the communication network by the computer program (8),
wherein the computer program (8) for manipulation of the data uses at least one random algorithm and is executed on an edge device connected to the communication network, in particular an industrial PC.

2. Method according to claim 1,
**characterised in that**
the effect on the operation of the real or the simulated installation (1, 12) is recorded and the real or the simulated installation (1, 12), or the control thereof, is adapted as required; in particular, identified problems are rectified.

3. Method according to claim 1 or 2,
**characterised in that**
a policy (10) for describing components (2-6, 14), which are or can be taken into consideration for the review, of the installation (1, 12), together with details on the behaviour of the components or on the connectivity of the components (2-6, 14) or on safety aspects that are relevant for the components, is created or provided, and the error situations based on chance are caused by the computer program (8), falling back on the policy (10).

4. Method according to claim 3,
**characterised in that**
the policy (10) furthermore comprises:
- details on which error cases can occur on the respective components, preferably classified by error type, or
- details on how error cases can be technically triggered and/or simulated, in particular by the computer program, or
- a number of error algorithms with associated parameters, which represent various scenarios, which preferably differ in which error types or components (2-6, 14) are to be taken into consideration, or how many errors are permitted to occur at the same time, or how the temporal behaviour is or how long an error situation is to persist, or how quickly the next error situation is to be caused subsequent to a previous error situation.

5. Method according to claim 3 or 4,
**characterised in that**
the policy (10) comprises prohibited error situations or is expanded with such, and the computer program (8) initially ascertains an error situation based on chance, aligns the ascertained error situation with the error situation that is prohibited according to the policy (10) and, only in the event that no prohibited error situation has been ascertained, triggers or simulates the error situation at the installation (1, 12), otherwise ascertaining a new random error situation and in turn aligning it with the error situations that are prohibited according to the policy (10).

6. Method according to one of claims 3 to 5,
**characterised in that**
in the policy (10), for at least one component (2-6, 14) it is stored that it is only permitted to be manipulated under certain conditions, in particular only with professional supervision and/or only at certain times.

7. Method according to one of claims 3 to 6,
**characterised in that**
the policy (10) and/or computer program (8) is loaded onto at least one component of the installation (1, 12).

8. Method according to one of claims 3 to 7,
**characterised in that**
an engineering tool (9) is provided, in which the policy (10) can be created or is created.

9. Method according to one of the preceding claims,
**characterised in that**
at least one component (2-6, 14) of the installation involves a controller (14), in particular a programmable logic controller, and data to be sent by this is manipulated at a cycle control point.

10. Method according to one of claims 3 to 8 and one of claims 1 or 9,
**characterised in that**
the computer program (8) manipulates the data according to the policy (10), in particular according to the details on how error situations can be technically triggered and/or simulated.

11. Method according to one of the preceding claims,
**characterised in that**
the installation (1) is assigned a safety facility (15) or the installation (1) comprises such, wherein the safety facility (15) is embodied or configured to enable an operation of the installation (1) which is at least intrinsically safe in relation to some safety aspects, and the safety facility (15) is activated during the reviewing of the installation (1), so that when, with the use of the computer program (8), an error situation is triggered which could lead or leads to a hazardous situation, the installation (1) is automatically transitioned into a safe state by the safety facility (15).

12. Method according to one of the preceding claims,
**characterised in that**
the computer program (8) outputs an instruction to a user, which comprises a manipulation action to be carried out manually by the user.

13. Method according to one of the preceding claims,
**characterised in that**
as an alternative or in addition to a real installation (1), the computer program (8) manipulates a simulated installation (12) and implements at least one error situation, which would not be able to be triggered in a real installation (1) corresponding to the simulation.

14. Computer program (8, 9) comprising program code means and at least one random algorithm, which is adapted such that it carries out the method from one of claims 1 to 13 when executed on a computer.

15. Computer-readable medium, which comprises the computer program according to claim 14.

16. System (7) for performing the method according to one of claims 1 to 13, comprising an edge device, in particular an industrial PC, with at least one connection, in particular for connecting to a communication network, at least one processor and at least one storage unit, the system with two or more components (2-6, 14) of an installation (1, 12) and the edge device, which are interconnected via a communication network, in particular in the form of a bus, **characterised in that** the computer program (8, 9) according to claim 14 is stored on the storage unit, the system (7) is embodied to carry out said computer program (8, 9),
the computer program (8, 9) comprises at least one random algorithm and is configured to manipulate data originating from real components (2-6, 14) of a provided real installation (1) or data originating from simulated components of a provided simulated installation (12), based on chance, in such a manner that error situations care caused in the real and/or the simulated installation (1, 12), and
it is provided that the data, which is to be sent from at least one component (2-6, 14) to at least one further component (2-6, 14) via the communication network, is manipulated before its handover to the communication network by the computer program (8).

## Revendications

1. Procédé de contrôle d'une installation (1, 12) industrielle, en particulier d'une installation d'automatisation,
dans lequel on manipule, en particulier en cours de fonctionnement, en utilisant un programme (8) d'ordinateur, des composants (2-6, 14) réels d'une installation (1) réelle mise à disposition ou des données en provenant ou des composants simulés d'une installation (12) simulée mise à disposition ou de données en provenant, de manière à provoquer au hasard des situations de panne dans l'installation (1, 12) réelle et/ou simulée,
**caractérisé en ce que**
deux ou plusieurs composants (2-6, 14) de l'installation (1, 12) sont reliés entre eux, en passant par un réseau de communication, en particulier sous la forme d'un bus, et on manipule, par le programme (8) d'ordinateur, des données envoyées d'au moins un composant (2-6, 14) à au moins un autre composant (2-6, 14), en passant par le réseau de communication avant leur transmission, au réseau de communication,
dans lequel le programme (8) d'ordinateur utilise pour la manipulation des données au moins un algorithme aléatoire et est exécuté sur un dispositif périphérique, en particulier un PC industriel, relié au réseau de communication.

2. Procédé suivant la revendication 1,
**caractérisé en ce que**
l'on détecte l'effet sur le fonctionnement de l'installation (1, 12) réelle ou simulée et on adapte suivant les besoins l'installation (1, 12) réelle ou simulée ou sa commande, en particulier en résolvant des problèmes ou des pannes identifiés.

3. Procédé suivant la revendication 1 ou 2,
**caractérisé en ce que**
l'on établit ou met à disposition un ensemble (10) de règles pour la description de composants (2-6, 14), à prendre en compte ou pouvant l'être pour le contrôle, de l'installation (1, 12) ensemble avec des indications sur le comportement des composants ou sur la connectivité des composants (2-6, 14) ou sur des aspects de sécurité, qui sont pertinents pour les composants et on provoque, en se reportant à l'ensemble (10) de règles, les situations de pannes au hasard par le programme (8) d'ordinateur.

4. Procédé suivant la revendication 3,
**caractérisé en ce que**
l'ensemble (10) de règles comprend en outre :
- des indications sur les cas de panne, qui peuvent se produire sur les composants respectifs, classés de préférence suivant les types de panne, ou
- des indications sur la façon, dont des cas de panne peuvent être résolus techniquement et/ou simulés, en particulier par le programme (8) d'ordinateur ou
- un ensemble d'algorithmes de panne ayant des paramètres, qui leur appartiennent et qui représentent des scénarios différents, qui distinguent de préférence les types de panne ou de composants (2-6, 14), qui doivent être pris en compte, ou combien de pannes peuvent se produire en même temps, ou quel est le comportement dans le temps, combien de temps une situation de panne doit être supportée ou avec quelle rapidité à la suite d'une situation de panne précédente la situation de panne venant immédiatement ensuite doit être provoquée.

5. Procédé suivant la revendication 3 ou 4,
**caractérisé en ce que**
l'ensemble (10) de règles comprend des situations de panne interdites ou est étendu par de telles situations, et le programme (8) d'ordinateur détermine d'abord une situation de panne aléatoire, égalise la situation de panne déterminée aux situations de panne interdites suivant l'ensemble (10) de règles, et ne déclenche ou ne simule la situation de panne sur l'installation (1, 12), que dans le cas où une situation de panne interdite n'a pas été déterminée, sinon détermine une situation de panne aléatoire nouvelle et l'égalise à nouveau à des situations de panne interdites suivant l'ensemble (10) de règles.

6. Procédé suivant l'une des revendications 3 à 5,
**caractérisé en ce qu'**
il est mis ou on met dans l'ensemble (10) de règles pour au moins un composant (2-6, 14), que celui-ci ne doit être manipulé, que dans certaines conditions, en particulier que sous la surveillance d'un homme du métier et/ou qu'un certain temps.

7. Procédé suivant l'une des revendications 3 à 6,
**caractérisé en ce que**
l'on charge l'ensemble (10) de règles et/ou le programme (8) d'ordinateur sur au moins un composant de l'installation (1, 12).

8. Procédé suivant l'une des revendications 3 à 7,
**caractérisé en ce que**
l'on met à disposition un outil (9) d'engineering, dans lequel l'ensemble (10) de règles peut être établi ou est établi.

9. Procédé suivant l'une des revendications précédentes,
**caractérisé en ce que**,
au moins un composant (2-6, 14) de l'installation est une commande (14), en particulier programmable par mémoire, et des données à envoyer par celle-ci à un point de commande de cycle sont manipulées.

10. Procédé suivant l'une des revendications 3 à 8 et l'une des revendications 1 ou 9,
**caractérisé en ce que**
le programme (8) d'ordinateur manipule les données suivant l'ensemble (10) de règles, en particulier suivant les indications, sur la manière dont des situations de panne peuvent être résolues techniquement et/ou simulées.

11. Procédé suivant l'une des revendications précédentes,
**caractérisé en ce que**
l'installation (1) est associée à un dispositif (15) de sécurité ou l'installation (1) en comprend un, dans lequel le dispositif (15) de sécurité est constitué ou agencé pour rendre possible un fonctionnement de l'installation (1) en sécurité propre, au moins en ce qui concerne certains aspects de sécurité, et le dispositif (15) de sécurité est activé pendant le contrôle de l'installation (1), de manière à ce que le dispositif (15) de sécurité fasse passer automatiquement dans un état sécurisé l'installation (1) si, en utilisant le programme (8) d'ordinateur, il est déclenché une situation de panne, qui conduit ou pourrait conduire à une situation dangereuse.

12. Procédé suivant l'une des revendications précédentes,
**caractérisé en ce que**
le programme (8) d'ordinateur émet une instruction à un utilisateur, qui comprend un traitement de manipulation à effectuer manuellement par l'utilisateur.

13. Procédé suivant l'une des revendications précédentes,
**caractérisé en ce que**
le programme (8) d'ordinateur manipule en variante ou supplémentairement à une installation (1) réelle une installation (12) simulée et réalise au moins une situation de panne, qui ne pourrait pas être déclenchée par des voies électroniques dans une installation (1) réelle correspondant à la simulation.

14. Programme (8, 9) d'ordinateur comprenant des moyens de code de programme et au moins un algorithme aléatoire, qui est adapté de manière à ce qu'il exécute, lorsqu'il se déroule sur un ordinateur, le procédé de l'une des revendications 1 à 13.

15. Support déchiffrable par ordinateur, qui comprend le programme d'ordinateur suivant la revendication 14.

16. Système (7) pour effectuer le procédé suivant l'une des revendications 1 à 13, comprenant un dispositif périphérique, en particulier un PC industriel, comprenant au moins une connexion, en particulier pour la connexion à un réseau de communication, au moins un processeur et au moins une mémoire,
le système comprenant deux ou plusieurs composants (2-6, 14) d'une installation (1, 12) et le dispositif périphérique, qui sont en communication en passant par un réseau de communication, en particulier sous la forme d'un bus, **caractérisé en ce que** le programme (8, 9) d'ordinateur suivant la revendication 14 est mis dans la mémoire et le système (7) est conformé pour exécuter ce programme (8, 9) d'ordinateur,
**en ce que** le programme (8, 9) d'ordinateur comprend au moins un algorithme aléatoire et est agencé pour manipuler aléatoirement des données provenant de composants (2-6, 14) réels d'une installation (1) réelle mise à disposition ou de composants simulés d'une installation (12) simulée mise à disposition, de manière à provoquer des situations de panne dans l'installation (1, 12) réelle et/ou simulée,
et
**en ce qu'**il est prévu, que les données, qui doivent être envoyées d'au moins un composant (2-6, 14) à au moins un autre composant (2-6, 14) en passant par le réseau de communication, soient manipulées par le programme (8) d'ordinateur avant leur transmission au réseau de communication.
